# EUROPÄISCHE PATENTANMELDUNG

(11) **EP 4 445 746 A1**
(43) Veröffentlichungstag der Anmeldung: **16.10.2024**
(21) Anmeldenummer: 24168709.4
(22) Anmeldetag: 05.04.2024
(51) Int. Cl.: A23L 7/109, A23L 11/00, A23L 33/00, A23L 33/185

(54) **KOHLENHYDRATARME, EIWEISS- UND BALLASTSTOFFREICHE TROCKENTEIGWARE**

(30) Priorität: 11.04.2023 DE 102023109046; 11.04.2023 DE 202023101801 U
(71) Anmelder: STEINERFOOD GMBH, 2224 Sulz im Weinviertel (AT)
(72) Erfinder: Steiner, Inge, Sulz im Weinviertel (AT); Steiner, Matthias, Sulz im Weinviertel (AS)
(74) Vertreter: Fleuchaus & Gallo Partnerschaft mbB

(57) **Zusammenfassung**

Die Erfindung bezieht sich auf eine kohlenhydratarme, eiweiß- und ballaststoffreiche Zusammensetzung auf Leguminosenbasis zur Herstellung von getrockneten Teigwaren in verschiedenen Ausformungen. Die Trockenteigwaren sind dabei kohlenhydratarm, eiweiß- und ballaststoffreich und sind insbesondere als diätetisches Nahrungsmittel, zur Gewichtsreduktion geeignet oder im Rahmen einer für Diabetiker geeigneten Ernährung wünschenswert.

## Beschreibung

Die Erfindung bezieht sich auf eine kohlenhydratarme, eiweiß- und ballaststoffreiche Zusammensetzung auf Leguminosen -und Getreidebasis sowie die Herstellung von getrockneten Teigwaren in verschiedenen Ausformungen aus dieser Zusammensetzung. Die hergestellten, kohlenhydratarmen, eiweiß- und ballaststoffreichen Nudeln sind insbesondere als diätisches Nahrungsmittel zur Gewichtsreduktion geeignet oder im Rahmen einer für Diabetiker geeigneten Ernährung wünschenswert als auch präventiv für den Erhalt der Gesundheit.

Konventionelle Nudeln enthalten je 100g Trockenware durchschnittlich 72g Kohlenhydrate, 12g Eiweiß und 4,8g Ballaststoffe bei einem Brennwert von ca. 350kcal. Solche konventionellen Nudeln werden üblicherweise aus Hartweizen, Weichweizen oder Dinkel und wahlweise Hühnerei hergestellt.

Konventionelle Nudeln bestehen damit vorrangig aus leicht verdaulichen und damit schnell verfügbaren Kohlenhydraten. Der Anteil an schnell verfügbaren Kohlenhydraten bei konventionellen Nudeln hat zur Folge, dass der Blutzucker nach einem Verzehr schnell ansteigt und der Körper entsprechend viel Insulin ausschüttet. Dadurch wird z.B. die Fettverbrennung für längere Zeit gestoppt. Dieser Effekt ist für jede Gewichtsreduktion, vornehmlich für eine Low Carb- oder Ketodiät, absolut kontraproduktiv und damit nachteilig. Auch Diabetiker müssen einen schnellen und damit schwer kontrollierbaren Anstieg des Blutzuckers vermeiden, um Schäden an Gefäßen und Organen zu minimieren. Es ist auch medizinisch erwiesen, dass ständige Blutzuckerspitzen durch schnell verfügbare Kohlenhydrate dem Gesunden schaden und daher diese Blutzuckerspitzen so häufig wie möglich zu vermeiden sind, um gesund zu bleiben und keinen Prädiabetes zu entwickeln.

Da in der europäischen Küche Nudeln oder Teigwaren ein Hauptbestandteil vieler Gerichte sind, besteht seit langem der Wunsch und Bedarf Nudelersatzprodukte bereitzustellen, die veränderte Nährwerte und insbesondere reduzierte Kohlenhydratanteile haben.

Es gibt bereits kohlenhydratreduzierte Nudeln auf dem Markt. Einige Beispiele sind hier aufgeführt und insbesondere durch deren Nährwerte bezogen auf 100g Trockenware geordnet:
BenFit: 25g Kohlenhydrate, 3g Fett, 30g Eiweiß, 30g Ballaststoffe, 307 Kcal.
Shape Republic: 20g Kohlenhydrate, 3,9g Fett, 46g Eiweiß, 14g Ballaststoffe, 327 Kcal.
Feeling ok: 12,3g Kohlenhydrate, 4g Fett, 55g Eiweiß, 15g Ballaststoffe, 335 Kcal.
CarbZone Proteinpasta: 14g Kohlenhydrate, 3g Fett, 60g Eiweiß, 8g Ballaststoffe, 340 Kcal.
Ciao Carb: 14g Kohlenhydrate, 3g Fett, 60g Eiweiß, 11g Ballaststoffe, 342 Kcal.
Foodspring: 25g Kohlenhydrate, 3,8g Fett, 50g Eiweiß, 10g Ballaststoffe, 350 Kcal.
KoRo Linsennudeln: 50g Kohlenhydrate, 5,5g Fett, 26g Eiweiß, 14g Ballaststoffe, 381 Kcal.

Die meisten dieser Produkte haben den Nachteil, dass hier ein Großteil der vermahlenen Leguminosensaaten ausgewählt sind aus Bohnen-, Linsen- und/oder Erbsenmehle, wodurch ein erheblich starker Eigengeschmack vorliegt. Dies wird von Konsumenten oft als erheblicher Nachteil gewertet.

Ein weiterer entscheidender Nachteil ist es, dass Nudeln auf Bohnen-, Linsen- oder Erbsenbasis leicht beim Kochen zerfallen oder matschig werden.

Zudem steigt bei den ausgewiesenen Mengen an Kohlenhydraten der genannten Produkte der Blutzucker nach dem Verzehr nach wie vor an, zwar nicht in derselben Geschwindigkeit wie bei konventionellen Nudeln, aber immer noch in einer Höhe, die vorübergehend die Fettverbrennung blockiert.

Es gibt des Weiteren, eine Art 'Nudel' mit der Bezeichnung "Shiritaki", die lediglich aus Wasser und Konjakmehl aus der Konjakwurzel (Teufelszunge) bestehen. Die Nährwerte, insbesondere der Gehalt an Kohlenhydraten sind bei Konjaknudeln sehr niedrig. Allerdings erinnert dieses Produkt sehr wenig an konventionelle Nudeln. Die Nudeln werden in Wasser konserviert, haben wenig Eigengeschmack, riechen manchmal nach Fisch. Die verzehrfertige Konsistenz ist gummiartig und weicht von der konventionellen Nudel erheblich ab. Darüber hinaus verursacht der hohe Gehalt an Glucomannan bei vielen Konsumenten Blähungen. Daher sind diese Nudeln für die meisten Verbraucher nur schwer dauerhaft in den Alltag integrierbar.

Weiterhin gibt es ein Nudel-ähnliches Produkt auf Gemüsebasis aus Palmherzen, welche aus der Palmenart *Bactria gasipaes* hergestellt werden. Auch diese werden in Wasser konserviert und schmecken neutral. Sie erinnern jedoch von der Konsistenz keineswegs an konventionelle Nudeln oder Teigwaren.

Bekannt sind weiterhin asiatische Glasnudeln, die aus Mungobohnenstärke hergestellt werden oder asiatische Reisnudeln, die aus Reismehl hergestellt werden. Beide haben im Vergleich zu Getreidenudeln eine andere Konsistenz und Nährstoffzusammensetzung. Sie haben einen sehr hohen Kohlenhydratanteil von 85g/100g.

Es war somit eine Aufgabe der Erfindung, eine Alternative bereitzustellen, die tatsächlich ein mit herkömmlicher Weizenpasta vergleichbares Nudelersatzprodukt ist, das eine Nudel-typische Konsistenz und Bissfestigkeit und darüber hinaus einen angenehmen Geschmack aufweist.

Das Produkt soll außerdem stark Kohlenhydrat-reduziert, sowie proteinreich und ballaststoffreich sein und damit für Diabetiker, sowie für alle Formen kohlenhydratarmer Ernährung geeignet sein.

Diese Aufgabe wird gelöst durch die Merkmale des Anspruchs 1. Vorteilhafte Ausgestaltungen sind den abhängigen Ansprüchen zu entnehmen.

Die Trockenteigware gemäß der Erfindung wird insbesondere hergestellt durch die Vermengung von Wasser, ggf. Salz und den geeigneten, angegebenen Zutaten gemäß Anspruch. Dieser Teig, welcher dann in Form gepresst, gezogen, geformt und/oder ausgestochen werden kann, kann frisch verarbeitet oder getrocknet werden: Er stellt die Grundbasis der Teigwaren bzw. Nudeln gemäß der vorliegenden Anmeldung dar.

Die erfindungsgemäße Trockenteigware wird hierzu hergestellt aus wenigstens
a) einer vermahlenen Leguminosensaat;
b) einer pflanzlichen oder tierischen Proteinquelle
c) einem pflanzenfaserhaltigen Ballaststoff, und
d) einer vermahlenen gelbildenden Komponente,
wobei diese Zutaten zu einem Teig verarbeitet werden, der je nach Rezept auch weitere Zutaten, wie Eier, Gemüse, Gewürzen, anderen Verarbeitungshilfen und ausgewählte Fettsäuren enthalten kann. Dieser Teig wird durch Walzen, Pressen, Ausstechen oder auf andere Weise in vielfältige Formen gebracht. Er wird keinem Gär- oder Backverfahren unterzogen, sondern für den Verzehr in kochendem Wasser gegart. Teigwaren bezeichnet man landläufig als Nudeln.

Gemäß einer bevorzugten Ausführungsform wird die erfindungsgemäße Trockenteigware hergestellt aus wenigstens:
- 35 - 55 Gew.% vermahlene Leguminosensaat,
- 25 - 40 Gew.% Protein;
- 10 - 15 Gew.% pflanzliche Fasern;
- 2 - 5 Gew.% gelbildende Komponente; und
Wasser als Restfeuchte.

Im Rahmen der vorliegenden Anmeldung werden regelmäßig Bestandteile der Mischung aufgezählt, ohne immer explizit hinzuzufügen, dass es sich regelmäßig um "vermahlene", in anderen Worten zu Mehl gemahlene Bestandteile handelt.

Insbesondere gelang es den Erfindern eine Rezeptur für Nudeln bereitzustellen, die nicht nur stark kohlenhydratreduziert, und auch protein- und ballaststoffreich ist, sondern, die darüber hinaus biss-fest und geschmackvoll ist. Das Produkt ist somit hervorragend geeignet zur diätetischen Ernährung.

Die Nährwerte des der Erfindung zugrunde liegenden Produktes berechnen sich für 100g Trockenware auf typischerweise 3,2g Kohlenhydrate, 6,2g Fett, 45g Eiweiß, 35g Ballaststoffe, 327 Kcal. Im Vergleich hierzu berechnen sich die Nährwerte herkömmlicher Nudeln aus Hartweizengrieß auf typischerweise 70,5g Kohlenhydrate, 1,2g Fett, 12,5g Eiweiß, 5,1g Ballaststoffe, 348 Kcal. (naehrwertrechner.de)

Entsprechend einer bevorzugten Ausführungsform besteht die Trockenteigware gemäß der vorliegenden Erfindung aus
- 35 - 55 Gew.% vermahlene Leguminosensaat, wobei die ersten mindestens 35 Gew.% Süßlupinenmehl sind und der darüberhinausgehende Anteil, also maximal 20 Gew.%, ausgewählt sind aus der Gruppe bestehend aus Süßlupinen, Sojabohnen, Ackerbohnen, Erbsen, Linsen, Kidneybohnen, Wachtelbohnen, Kichererbsen, Azukibohnen, Limabohnen, Erdnüssen, sowie Mischungen hieraus.

Es sei weiterhin erwähnenswert, dass geschmackliche Verbesserungen auch noch erzielt werden durch ein Anrösten der zu verwendenden Leguminosensaaten.

Als weiter vorteilhaft werden die vermahlene Leguminosenmehle ausgewählt aus enzymatisch inaktivierten Mehlen oder Mehlen mit geringer Enzymaktivität, insbesondere gegenüber Lipasen und Lipoxygenasen. Bei konventionellen vermahlenen Leguminosensaaten kommt es häufig vor, dass das enthaltene Öl bei längerer Lagerung beispielsweise bei einer Durchschnittstemperatur von über ca. 25°C ranzig werden kann. Dies bedingt entsprechende nachteiligen Geschmackseinbußen, ausgelöst durch in dem Mehl enthaltenen Enzymen. Bei enzymatisch inaktivierten Mehlen oder Mehlen mit geringer Enzymaktivität werden die Enzyme vorteilhaft in Ihrer Aktivität gedrosselt bzw. inaktiviert. Dies bedingt, dass auch bei längerer Lagerung der Mehle keine Geschmackeinbußen eintreten.

Geeignete Verfahren zur Herstellung von enzymatisch inaktivierten Mehlen oder Mehlen mit geringer Enzymaktivität, wie bspw. durch ausreichend lange Hitzeeinwirkung, sind dem Fachmann geläufig. Bei einer möglichen Inaktivierung durch Hitze (Röstung) wird gleichzeitig vorteilhaft eine gesteigerte Schmackhaftmachung des Mehles und seiner Verarbeitungsprodukte erreicht.

Das Mehl der Süßlupine ist im Rahmen der Erfindung bevorzugt und reich an essentiellen Aminosäuren, um den menschlichen Körper mit lebenswichtigen Proteinen zu versorgen. Außerdem ist ein hoher Anteil an Ballaststoffen und nur wenig Kohlenhydrate und Fett enthalten. Das Süßlupinenmehl für die Erfindung ist durch Röstung enzyminaktiv und vom Geschmack mehlartig.

Typischerweise enthält eine erfindungsgemäße Trockenteigware auch nicht nur 35 Gew.% vermahlene Leguminosensaat, sondern weitere Rezepturen enthalten einen Anteil an Süßlupinenmehl der mindestens 38, 40, 42, 43, 45, 48, 50, 52, 54, oder 55 Gew.% entspricht.

Der Anteil an zusätzlichen oder alternativen Leguminosenmehlen mag schwanken und ist begrenzt durch ein eventuelles geschmackliches und unerwünschtes Hervorstechen. Darüber hinaus ist festzuhalten, dass bei mehr als 20 Gew.% der alternativen Leguminosensaat, ausgewählt sind aus der Gruppe bestehend aus Sojabohnen, Ackerbohnen, Erbsen, Linsen, Kidneybohnen, Wachtelbohnen, Kichererbsen, Azukibohnen, Limabohnen, Erdnüssen, sowie Mischungen hieraus, die Konsistenz der Teigware leidet und beim oder nach dem Kochen im Wasser zerfällt.

Entsprechend der bevorzugten Ausführungsform enthält die Trockenteigware weiterhin 25-40 Gew.% Protein, das ausgewählt ist aus pflanzlichen und/oder tierischen Proteinquellen. Sofern die Trockenteigware aus oder mit pflanzlichem Protein hergestellt wird, wird dieses isoliert aus der Gruppe bestehend aus glutenhaltigem Getreide, Weizen, Gerste, Roggen, Hafer, Dinkel, Reis, Khorasan-Weizen, und Mischungen derselben.

Vorzugsweise handelt es sich um Gluten. Insbesondere Gluten oder Weizenkleber, also isoliertes und/oder aufgereinigtes Gluten oder Weizenprotein ist ein bevorzugter Bestandteil, denn Gluten verleiht hier beschriebenen Teigwaren ein angenehmes Mundgefühl.

Sofern die Trockenteigware aus oder mit tierischem Protein hergestellt wird, wird dieses ausgewählt aus Vollei, Eidotter, Eiklarpulver, Trockenvolleipulver und Molkenproteinpulver.

Typischerweise beträgt der Anteil an Protein in der Trockenteigware nahezu 50 Gew.% und damit handelt es sich um eine hoch proteinreiche Nudel. Alternativ gemäß anderer Rezepturen enthält die erfindungsgemäße Trockenteigware 30 Gew.%, 35 Gew.%, 40 Gew.%, 42 Gew.%, 45 Gew.%, 47 Gew.% oder 49 Gew.%.

Entsprechend der bevorzugten Ausführungsform enthält die Trockenteigware weiterhin wenigstens 10-15 Gew.% pflanzliche Fasern, die ausgewählt sind aus der Gruppe der pflanzlichen oder pflanzenfaserhaltigen Ballaststoffe bestehend aus Samenschalen, Fruchtschalen, Halmen oder Spelzen. Insbesondere sind die bevorzugten pflanzlichen Fasern aus den Fasern und Rohfasern von Hafer, Gerste, Weizen, Roggen, Dinkel, Hirse, Mais, Reis, Erbse, Zitrusfrüchten, Kakaobohne, Apfel, Kartoffel und Mischungen derselben ausgewählt.

Der Begriff "pflanzenfaserhaltiger Ballaststoff" weist im Rahmen der vorliegenden Anmeldung auf ein Beiprodukt eines Samenerzeugnisses bzw. von samentragenden Erzeugnissen hin und umfasst Samenschalen, Fruchtschalen, Halmen oder Spelzen. Insbesondere werden unter dieser Definition Samenschalen, Fruchtschalen, Halmen oder Spelzen von Samenpflanzen ausgewählt aus der Gruppe bestehend aus Hafer, Gerste, Weizen, Roggen und Erbse verstanden. Weiterhin umfasst die Definition Fasern oder Rohfasern von z.B. Apfel, Kartoffel, Zitrusfrüchten und auch mikrokristalline Cellulose sowie Mischungen aus allen vorgenannten.

Alternative gemäß individueller Rezepturen enthält die erfindungsgemäße Trockenteigware 11 Gew.%, 12 Gew.%, 13 Gew.%, 14 Gew.%, 15 Gew.% oder Werte dazwischen an pflanzlichen Fasern.

Im Rahmen der Erfindung hat sich insbesondere gezeigt, dass die Zugabe dieser pflanzenfaserhaltigen Ballaststoffe erheblich zur Struktur- und Konsistenzverbesserung der Teigwaren beitragen.

Beispielsweise zeigte sich bei einer Ausführungsform mit niedrigeren Glutenanteil in der erfindungsgemäßen Mischung, dass sich der Einsatz von Zitrusfasern aus Zitrusfrüchten als vorteilhaft bewährt, die nach Zufuhr von wässriger Flüssigkeit im Teig gute Bindungseigenschaften ähnlich zu Gluten zeigen. Dadurch wurde es auch möglich den nachfolgend beschriebenen Anteil an eingesetzter vermahlener gelbildender Komponente zu reduzieren.

Gemäß einer Ausführungsform sind die pflanzenfaserhaltigen Ballaststoffe Haferfasern. Haferfasern werden aus den Haferschalen hergestellt. Nicht zu verwechseln sind sie mit Kleie oder Haferspelzspeisekleie, die aus Mühlennachprodukten generiert werden. Die erfindungsgemäßen Haferschalen werden nicht wie bei der Herstellung von Haferspeisekleie (oat bran) oder Haferspelzspeisekleie (oat spelt bran) lediglich einer Vermahlung unterworfen. Vielmehr werden sie einem aufwendigen und schonenden thermophysikalischen Verfahren bearbeitet und haben eine höhere Ballaststoffwertigkeit als herkömmlich hergestellte Haferspeisekleie oder Haferspelzspeisekleie. Dadurch bleibt der Gehalt an Vitaminen, Mineralstoffen und Spurenelementen wie Eisen, Zink, Kalium und Selen weitgehend erhalten.

Haferfasern stellen den idealen Ballaststoff zur Erzeugung der erfindungsgemäßen Teigwaren dar. Sie sind neutral im Geschmack und haben gutes Quellungsvermögen, so dass sie einen entscheidenden ernährungsphysiologischen Mehrwert bieten. So tragen sie insbesondere zu einer guten Darmfüllung bei und stellen damit ein effizientes Funktionieren der normalen Verdauung sicher bei gleichzeitiger Verringerung der Transitzeiten im Darm. Darüber hinaus verzögern Haferfasern die Resorptionszeiten und flachen somit einen Anstieg der Blutglukose ab. Zusätzlich wirkt sich Haferfaser positiv auf die Verdauung und Stuhlgang aus. Haferfasern enthalten zudem Beta-Glucan. Wissenschaftliche Studien belegen, dass dieser den Blutzucker regulieret bzw. normalisiert, das Sättigungsgefühl verbessert, die Darmgesundheit positiv beeinflusst, das Immunsystem aktiviert und den Cholesterinspiegel im Blut senkt.

Gemäß weiterer Ausführungsformen ist insbesondere auch die Faserlänge zur Erreichung einer angenehmen Struktur und Textur entscheidend und besagte Faserlänge der pflanzenfaserhaltigen Ballaststoffe wird mit einer durchschnittlichen Länge im Mikrometerbereich, nämlich von 15 µm bis 50 µm, 15 µm bis 40 µm, 15 µm bis 35 um, 15 µm bis 25 µm, 20 µm bis 25 µm oder 25 µm bis 35 µm eingesetzt.

Gemäß einer Ausführungsform der Erfindung haben die pflanzenfaserhaltigen Ballaststoffe (Haferfasern) eine mittlere Länge von 30 µm (Haferfasern OF30). Haferfasern dienen bei dieser Erfindung als Gerüst, das dem Produkt nach der Zubereitung eine stabile Struktur verleiht. Dies bewirkt eine sehr gute Bisseigenschaft.

Gemäß weiterer Ausführungsformen werden besagte Fasern mit einer mittleren Länge 15 µm, 20 µm, 30 µm, 40 µm, 50 µm oder Mischungen derselben eingesetzt.

Gemäß einer anderen Ausführungsform wird der Anteil der pflanzlichen Fasern ergänzt mit 2-5, 2,2-4,8, 2,7-4,2, 2,8-4,0 Gew.% mikrokristalliner Cellulose.

Entsprechend der bevorzugten Ausführungsform enthält die Trockenteigware weiterhin wenigstens 2-5 Gew.% einer gelbildenden Komponente. Dabei kann die erfindungsgemäße Mischung wenigstens eine oder mehrere vermahlene, gelbildende Komponenten enthalten.

Alternative gemäß individueller Rezepturen enthält die erfindungsgemäße Trockenteigware 2,1 Gew.%, 2,5 Gew.%, 2,7 Gew.%, 2,9 Gew.%, 3 Gew.%, 3,1 Gew.%, 3,5 Gew.%, 3,7 Gew.%, 4 Gew.%, 4,2 Gew.%, 4,3 Gew.%, 4,5 Gew.%, 4,6 Gew.%, 4,8 Gew.%, 4,9 Gew.% oder Werte dazwischen an gelbildender Komponente.

Der Begriff "gelbildende Komponente" weist im Rahmen der vorliegenden Anmeldung auf ein quellbares natürliches Polymer hin und ist ausgewählt aus vermahlenen Samen oder Samenerzeugnissen, bspw. Samenschalen der Gruppe bestehend aus Konjak, Alginat, Gellan, Agar, Pektin, Carragen, Guarkernen, Bockshornsamen, Johannisbrotkernen, Flohsamen, Leinsamen, Goldleinsamen, Chiasamen, Sonnenblumenkernen, Kürbiskernen, Aprikosenkernen, Mandelkernen, Hanfsamen, Pflaumenkernen sowie Mischungen aus den vorgenannten.

Zum Beispiel besitzen Chiasamen ein hohes Quellvermögen. Gleichzeitig hat der Verzehr von Chiasamen positiv blutzuckersenkende Wirkung. In einer alternativen Ausführungsform oder optional auch zusätzlich können Chiasamen auch im Ganzen eingesetzt werden aufgrund ihrer Eigenschaft bei Kontakt mit wässrigen Flüssigkeiten (Quellung), wie dies bei der Teigherstellung für Backwaren üblich ist, eine gelartige Polysaccharidschicht um die äußere Samenschale auszubilden. Die Polysaccharide treten bei der Quellung des Chiasamens in wässriger Flüssigkeit aus dem Chiasameninneren aus. Der Großteil bleibt aber mit der äußeren Samenschale verbunden unter Ausbildung besagter gelartiger Polysaccharidschicht.

Nach einer alternativen Ausführungsform der erfindungsgemäßen Mischung enthält die "gelbildende Komponente" Gellan.

Eine weitere alternativ einzusetzende gelbildende Komponente ist Konjakmehl dessen Rohstoff Glucomannan ist und der aus dem getrockneten und vermahlenen Wurzelstock der Teufelszunge gewonnen wird. Das Polysaccharid bildet in Verbindung mit Wasser ein starkes Gel und verleiht der Erfindung die leicht flexible Konsistenz konventioneller Nudeln.

Glucomannan gilt als wertvoller Ballaststoff und wirkt sich positiv auf die Darmflora aus. In der geringen Menge besteht überdies nicht die Gefahr von unerwünschten Blähungen.

Nach dem Formen und Trocknen der Trockenteigwaren gemäß der obigen Anteile und Rezeptur können bis zu 2, 3, 4, 5, 6, 7, 8, 9,10 Gew.% Restfeuchte enthalten sein.

Die Trockenteigwaren gemäß der Erfindung sind somit ein kohlenhydratreduziertes, protein- und ballaststoffreiches Produkt hervorragend geeignet zur diätetischen Ernährung.

Die Nährwerte der Erfindung berechnen sich somit für 100g Trockenware auf 3,2g Kohlenhydrate, 6,2g Fett, 45g Eiweiß, 35g Ballaststoffe, 327 Kcal. Im Vergleich hierzu berechnen sich die Nährwerte herkömmlicher Nudeln aus Hartweizengrieß auf typischerweise 70,5g Kohlenhydrate, 1,2g Fett, 12,5g Eiweiß, 5,1g Ballaststoffe, 348 Kcal. (naehrwertrechner.de)

Entsprechend einer weiteren Ausführungsform enthält die Trockenteigware weiterhin wenigstens 3-10 Gew.% Fettsäuren ausgewählt aus der Gruppe der gesättigten oder ungesättigten Fettsäuren bestehend aus, Butter, Olivenöl, Rapsöl, Sonnenblumenöl, Distelöl, Palmöl und Mischungen derselben.

Alternative gemäß individueller Rezepturen enthält die erfindungsgemäße Trockenteigware 3,1 Gew.%, 3,5 Gew.%, 3,7 Gew.%, 3,9 Gew.%, 4 Gew.%, 4,1 Gew.%,4,5 Gew.%, 4,7 Gew.%, 5 Gew.%, 5,5 Gew.%, 5,8 Gew.%, 6 Gew.%, 6,5 Gew.%, 7,0 Gew.%, 7,5 Gew.%, 8 Gew.%, 8,5 Gew.%, 9,0 Gew.%, 9,5 Gew.% oder Werte dazwischen an Fettsäuren.

Während für die Erzeugung von herkömmlichen Teigwaren nicht zwingend ein Fettgehalt nötig ist, hat es sich doch gezeigt, dass der Verbraucher die sensorische Veränderung durch einen erhöhten Fettgehalt positiv wahrnimmt. Dennoch kommt die erfindungsgemäße Teigware mit minimalem Zusatz von weiteren Fetten, die nicht schon - z.B. im Trockenvollei als Bestandteil der Proteinkomponente oder z.B. dem optionalen frischen Eidotter oder Lecithin (z.B. Sojalecithin) enthalten sind - aus.

Gemäß einer Ausführungsform enthält die erfindungsgemäße Mischung folglich einen Fettgehalt von 3-10 Gew.% der Teigware. Diese Werte können ohne zusätzliche Zugabe von Fettquellen erreicht werden, denn es ist zu berücksichtigen, dass auch z.B. Eidotter oder Sojalecithin den Fettgehalt beeinflusst.

In Teigwaren können die Werte durch zusätzliche Zugabe von Fettquellen weiter erhöht werden, nämlich durch Einmischen während der Zubereitungsphasen. Diese Fette können durch Pflanzenöle und/oder tierische Fette, die jeweils als Fettquelle fungieren, eingebracht werden ausgewählt aus der Gruppe von Pressölen, z.B. Olivenöl, Rapsöl, Sonnenblumenöl, Distelöl, oder tierischen Fetten, z.B. Butter oder Schmalz.

Neben Geschmack, Aussehen und Konsistenz solcher stark kohlenhydratreduzierten Teigwaren spielt auch deren industrielle Herstellbarkeit eine große Rolle, denn ein Teig muss so beschaffen sein, dass er in maschinellen Anlagen störungsfrei verarbeitet werden kann und so eine großtechnische Fertigung ermöglicht. Ein Teig, der diese Anforderungen nicht erfüllt, kann allenfalls in Handwerksbetrieben in Handarbeit und in kleinen Stückzahlen verarbeitet werden.

Bei großtechnisch, d.h. durchgehend maschinell hergestellten Teigwaren wurde ein Gesamt-Kohlenhydratgehalt von unter 4% (Nass-Gew.%) bislang nicht erreicht, denn um die für eine großtechnische Verarbeitbarkeit erforderliche Teigkonsistenz zu erhalten, kann bei bekannten Nudeln nicht vollständig auf die Zugabe von Stärke oder Getreidemehlen verzichtet werden.

Bei den mit der erfindungsgemäßen Mischung erzeugten Teigen und den daraus hergestellten Nudeln handelt es sich um Rezepturen, die sich in Zusammensetzung und Verarbeitung, viel mehr aber noch bezüglich der vorteilhaften Ernährungsbilanz erheblich von den konventionellen Alternativen unterscheiden.

Die erzeugten Teigwaren eigenen sich daher - beim Verzehr üblicher Mengen - zur unterstützenden Diät von Diabetespatienten, denn der Verzehr lässt den Blutzuckerspiegel im menschlichen Körper allenfalls unmerklich ansteigen, so dass bei Diabetespatienten auf die Gabe von Medikamenten oder Insulin weitgehend verzichtet werden kann.

Darüber hinaus ist es bekannt, dass die eingesetzten Ballaststoffe helfen ein Diabetesrisiko zu senken, denn sie bewirken, dass die verwertbaren Kohlenhydrate im Darm langsamer aufgeschlossen und damit aufgenommen werden. Dies führt zu einer langsamen Erhöhung des Blutzuckerspiegels, was sich günstig auf das Diabetesrisiko auswirkt. Für gesunde Menschen wirkt sich ein konstanter Blutzuckerspiegel ebenfalls positiv auf den Erhalt der Gesundheit und das Vermeiden eines frühzeitig zurückkehrenden Hungergefühls aus.

Weiterhin eignen sich die mit der erfindungsgemäßen Mischung erzeugten Teigwaren auch für ältere Menschen, die oft Schwierigkeiten haben, ihren Bedarf an Eiweiß und/oder Ballaststoffen zu decken. Und nicht zuletzt Sportler und Menschen, die sich fit halten wollen, können das enthaltene, hochwertige Mehrkomponenteneiweiß zum Muskelaufbau nutzen.

Es ist den Erfindern vorbehaltslos zuzuerkennen, dass ihre hohe Priorität gerichtet auf das Erreichen idealer Nährwerte unterVerwendung natürlicher Rohstoffe, und die gleichzeitige Vermeidung von Zusätzen wie künstliche Konservierungsstoffe, Geschmacksverstärker, Emulgatoren und ähnliche Bestandteile zu einem einzigartigen Produkt führt, nämlich zu einer Trockenteigware die ein kohlenhydratreduziertes, protein- und ballaststoffreiches Produkt ist und hervorragend geeignet ist zur diätetischen Ernährung.

### Beispiele

### Beispiel 1:

Eine Rezeptur gemäß der Erfindung basiert auf folgenden Zutaten:
35 % Süßlupinenmehl,
15 % Sojamehl
25 % Weizenkleber
15 % Haferfasern
3,0 % Konjakmehl
(3% Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

### Beispiel 2:

Eine Rezeptur gemäß der Erfindung basiert auf folgenden Zutaten:
40 % Süßlupinenmehl,
5 % Sojamehl
5% Linsenmehl
35 % Weizenkleber
10 % Haferfasern
3,0 % Konjakmehl
(ca 3% Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

### Beispiel 3:

Eine Rezeptur gemäß der Erfindung basiert auf folgenden Zutaten:
45 % Süßlupinenmehl,
5 % Kichererbsenmehl
30 % Weizenkleber
12,5 % Haferfasern
3,0 % Konjakmehl
(5,5 % Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

### Beispiel 4:

Eine Rezeptur gemäß der Erfindung basiert auf folgenden Zutaten:
48 % Süßlupinenmehl,
30 % Weizenkleber,
13 % Haferfasern
3,0 % Konjakmehl
(6 % Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

Die fertigen Nudeln dieses oder der vorangehenden Beispiel eignen sich zur Herstellung schmackhafter Nudelgerichte mit z.B. nur 1,3 Gew.% verwertbaren Kohlenhydraten, 20 Gew.% Eiweiß, 4,8 Gew.% Fett, 14 Gew.% Ballaststoffe und einem Brennwert von 133 Kilokalorien, bzw. 556 Kilojoule.

### Beispiels:

Eine Rezeptur gemäß der Erfindung basiert auf folgenden Zutaten:
35 % Süßlupinenmehl,
5 % Sojamehl
12 % Linsenmehl
23 % Weizenkleber
15 % Haferfasern
3,0 % Konjakmehl
(6% Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

### Beispiel 6:

Eine Rezeptur gemäß der Erfindung basiert auf folgenden Zutaten:
45 % Süßlupinenmehl,
5 % Sojamehl
3 % Erbsenmehl
30 % Vollei
14 % Haferfasern
3,0 % Konjakmehl
(4% Restfeuchte)

Die Zutaten werden vermengt zu einem stabilen Teig, der dann in Nudeln beliebiger Form und Gestalt geformt werden. Nachdem die Nudeln getrocknet wurden, sind sie zubereitbar wie herkömmliche Nudeln durch Zubereitung in leicht kochendem Wasser.

Diese Rezeptur eignet sich dabei besonders für großflächige Nudeln oder Teigplatten.

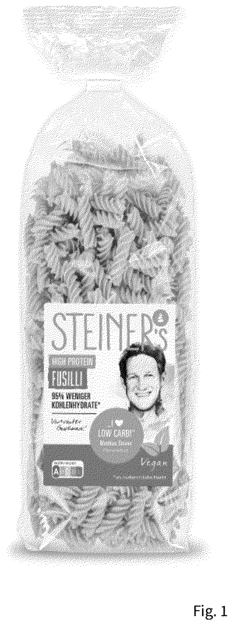

## Patentansprüche

1. Trockenteigware bestehend aus
- 35 - 55 Gew.% vermahlene Leguminosensaat, wobei die ersten mindestens 35 Gew.% Lupinenmehl sind und der darüberhinausgehende Anteil maximal 20 Gew.% ausgewählt sind aus der Gruppe bestehend aus Lupinen, Sojabohnen, Ackerbohnen, Erbsen, Linsen, Kidneybohnen, Wachtelbohnen, Kichererbsen, Azukibohnen, Limabohnen, Erdnüssen, sowie Mischungen hieraus;
- 25-40 Gew.% Protein;
- 10-15 Gew.% pflanzliche Fasern;
- 2-5 Gew.% gelbildende Komponente; und
Wasser als Restfeuchte.

2. Trockenteigware gemäß Anspruch 1, wobei der Anteil an Lupinenmehl mindestens 38, 40, 42, 45, 48, 50, 52, 54 Gew.% entspricht.

3. Trockenteigware gemäß der Ansprüche 1-2, wobei das Protein ausgewählt ist aus pflanzlichen oder tierischen Proteinquellen.

4. Trockenteigware gemäß der Ansprüche 1-3, wobei das pflanzliche Protein isoliert ist aus der Gruppe bestehend glutenhaltigem Getreide, Weizen, Gerste, Roggen, Hafer, Dinkel, Reis, Khorasan-Weizen, und Mischungen derselben.

5. Trockenteigware gemäß der Ansprüche 1-4, wobei das pflanzliche Protein Gluten ist.

6. Trockenteigware gemäß der Ansprüche 1-5, wobei das tierische Protein ausgewählt ist aus Vollei, Eidotter, Eiklarpulver, Trockenvolleipulver und Molkeproteinpulver.

7. Trockenteigware gemäß der Ansprüche 1-6, wobei die pflanzliche Faser ausgewählt ist aus der Gruppe der pflanzlichen Ballaststoff bestehend aus Samenschalen, Fruchtschalen, Halmen oder Spelzen.

8. Trockenteigware gemäß der Ansprüche 1-7, wobei die pflanzlichen Ballaststoffe ausgewählt sind aus den Fasern und Rohfasern von Hafer, Gerste, Weizen, Roggen, Dinkel, Hirse, Mais, Reis, Erbse, Zitrusfrüchten, Kakaobohne, Apfel, Kartoffel und Mischungen derselben.

9. Trockenteigware gemäß der Ansprüche 1-8, wobei der Anteil der pflanzlichen Fasern ergänzt wird mit 2-5 Gew.% mikrokristalliner Cellulose.

10. Trockenteigware gemäß der Ansprüche 1-9, wobei die gelbildende Komponente ausgewählt ist aus der Gruppe bestehend aus vermahlenen oder extrahierten Extrakten von Konjak, Alginat, Gellan, Agar, Pektin, Carragen, Guarkernen, Bockshornsamen, Johannisbrotkernen, Flohsamen, Leinsamen, Goldleinsamen, Chiasamen, Sonnenblumenkernen, Kürbiskernen, Aprikosenkernen, Mandelkernen, Hanfsamen, Pflaumenkernen und Mischungen derselben.

11. Trockenteigware gemäß der Ansprüche 1-10, wobei die Mischung weiterhin 3-10 Gew.% Fettsäuren ausgewählt aus der Gruppe der gesättigten oder ungesättigten Fettsäuren bestehend aus Butter, Olivenöl, Rapsöl, Sonnenblumenöl, Distelöl, Palmöl, Lecithin und Mischungen derselben.

12. Trockenteigware gemäß einem der Ansprüche 1-11 **dadurch gekennzeichnet, dass** die Zusammensetzung auf 100 g Trockengewicht eine Nährwert Zusammensetzung von bis zu 4 g Kohlenhydrate und von bis zu 49 g Eiweiß aufweist.

13. Trockenteigware gemäß einem der Ansprüche 1-11 **dadurch gekennzeichnet, dass** im gekochten und verzehrfertigen Nudelersatzprodukt der insulininduzierende Kohlenhydratanteil höchsten 2 Gew.% bezogen auf das Gesamtgewicht ist.

14. Trockenteigware gemäß einem der Ansprüche 1-13 zur Verwendung in der diätetischen Ernährung und/oder
zurVerwendung in der Blutzucker-reduzierenden Ernährung bei Diabetes.
